# EUROPEAN PATENT SPECIFICATION

(11) **EP 3 698 985 B1**
(45) Date of publication and mention of the grant of the patent: **01.09.2021**
(21) Application number: 20156644.5
(22) Date of filing: 11.02.2020
(51) Int. Cl.: B60C 11/03, B60C 11/16

(54) **TIRE**
REIFEN
PNEUMATIQUE

(30) Priority: 19.02.2019 JP 2019027584
(43) Date of publication of application: 26.08.2020
(73) Proprietor: Sumitomo Rubber Industries, Ltd., Kobe-shi, Hyogo-ken 651-0072 (JP)
(72) Inventor: ISHINO, Hiroyuki, Kobe-shi, Hyogo 651-0072 (JP); HASHIMOTO, Yuto, Kobe-shi, Hyogo 651-0072 (JP)
(74) Representative: Manitz Finsterwald Patent- und Rechtsanwaltspartnerschaft mbB

(56) References cited:
- EP-A1- 3 031 628
- EP-A1- 3 153 335
- WO-A1-2009/147047
- DE-A1-102009 044 547
- JP-A- S6 294 402

## Description

### BACKGROUND OF THE INVENTION

### Field of the Invention

The present invention relates to a tire and specifically relates to a tire having a stud pin-fixing hole provided in a tread portion.

### Description of the Background Art

Japanese Laid-Open Patent Publication No. 2017-071339 proposes a winter tire having holes, for fixing stud pins, provided in a tread portion. The tread portion of the winter tire is provided with recesses that are recessed from a tread surface. Each of the recesses is provided with the hole and projections that project outward in the tire radial direction at positions away from the hole.

In the winter tire of Japanese Laid-Open Patent Publication No. 2017-071339, ice chips are discharged from the recesses using the projections, thereby improving on-ice performance. However, as a result of an experiment conducted by the inventors, there is room for further improvement in improving on-ice performance.

A tire in accordance with the preamble of claim 1 is known from EP 3 153 335 A1. Related tires are known from DE 10 2009 044547 A1, EP 3 031 628 A1, JP S62 94402 A and WO 2009/147047 A1.

### SUMMARY OF THE INVENTION

The present invention has been made in view of the above-described problem, and a main object of the present invention is to provide a tire capable of exhibiting excellent on-ice performance.

The present invention is directed to a tire including a tread portion, wherein: the tread portion includes a recess that is recessed from a ground-contact surface thereof; the recess includes a bottom surface and an inner circumferential surface that is connected to the bottom surface and the ground-contact surface; the recess is provided with a stud pin-fixing hole that is open in the bottom surface, and a plurality of projections that project from the bottom surface; and the projections include a first projection that is connected to the ground-contact surface and that projects outward in a tire radial direction of the ground-contact surface.

Preferably, in a tread plan view of the tire according to the present invention, a length, in a circumferential direction along the inner circumferential surface, of the first projection gradually increases toward the hole.

Preferably, in a tread plan view of the tire according to the present invention, a length, in a circumferential direction along the inner circumferential surface, of the first projection gradually decreases toward the hole.

Preferably, in the tire according to the present invention, the projections include a second projection separated from the inner circumferential surface.

Preferably, in the tire according to the present invention, the second projection projects outward in the tire radial direction further than the first projection.

Preferably, in a tread plan view of the tire according to the present invention, a first length, in a circumferential direction along the inner circumferential surface, of the second projection is larger than a second length, in a radial direction from the hole toward the inner circumferential surface, of the second projection.

Preferably, in the tire according to the present invention, the hole is surrounded by a plurality of the first projections and a plurality of the second projections.

Preferably, in the tire according to the present invention, the first projections and the second projections are alternately provided in the circumferential direction along the inner circumferential surface.

In the tire according to the present invention, the first projection prevents ice chips from entering the recess. Therefore, a reduction in a projecting height of a stud pin by ice chips can be inhibited. In addition, the first projection is connected to the ground-contact surface. Thus, the first projection has excellent durability, and chipping or the like of the first projection at the early stage is prevented, so that the first projection improves on-ice performance over a long period of time.

### BRIEF DESCRIPTION OF THE DRAWINGS

FIG. 1 is a development of a tread portion of a tire according to an embodiment;
FIG. 2 is an enlarged perspective view of a recess in FIG. 1;
FIG. 3 is an enlarged plan view of the recess in FIG. 1;
FIG. 4 is an end view taken along a line A-A in FIG. 3;
FIG. 5 is an enlarged perspective view of a recess of another embodiment of the present invention;
FIG. 6 is an enlarged plan view of the recess in FIG. 5; and
FIG. 7 is an enlarged perspective view of a recess of a comparative example.

### DESCRIPTION OF THE PREFERRED EMBODIMENTS

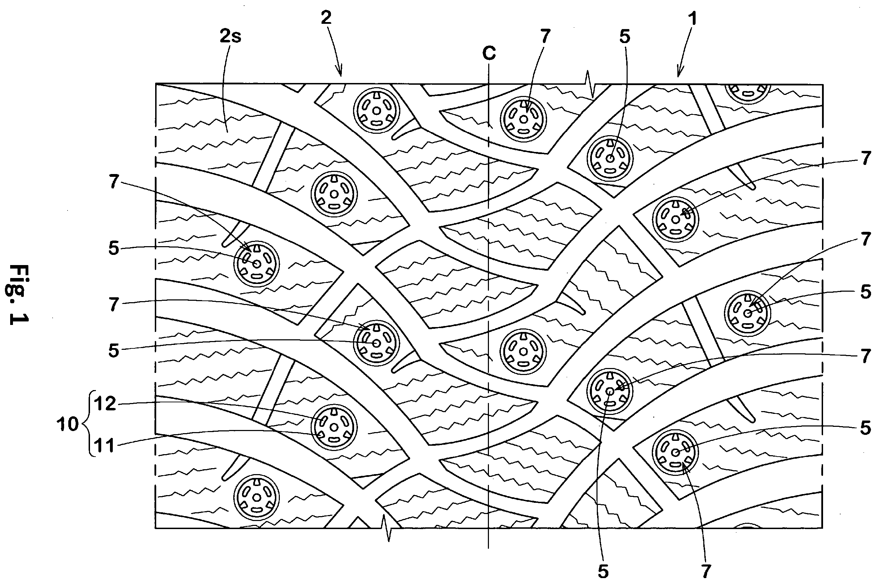

Hereinafter, an embodiment of the present invention will be described with reference to the drawings. FIG. 1 shows a tread portion 2 of a tire 1 according to the present embodiment. The tire 1 of the present embodiment has stud pin-fixing holes 5 provided in the tread portion 2, and stud pins (not shown) are mounted in the holes 5 when the tire 1 is used. The tire 1 of the present embodiment is suitably used, for example, as a winter tire for a passenger car. The stud pins provide great frictional force during running on ice. Hereinafter, regarding the structure of the tire 1, unless otherwise specified, the structure of the tire 1 in a state where: the tire 1 is mounted to a normal rim and inflated to a normal internal pressure; no load is applied to the tire 1; and the stud pins are not mounted in the holes 5, will be described.

The "normal rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "normal internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The hardness of a rubber that forms the tread portion 2 is, for example, 45 to 65 degrees. In the present specification, the hardness of the rubber is indicated by a JIS-A hardness that conforms to JIS-K6253.

The tread portion 2 includes, for example, a plurality of blocks demarcated by a plurality of grooves. The pattern of the tread portion 2 is not particularly limited in the present invention, and, for example, may be formed so as to include a rib that is continuous in the tire circumferential direction. The blocks provided to the tread portion 2 are provided with a plurality of recesses 7 that are recessed from a ground-contact surface 2s of the tread portion 2.

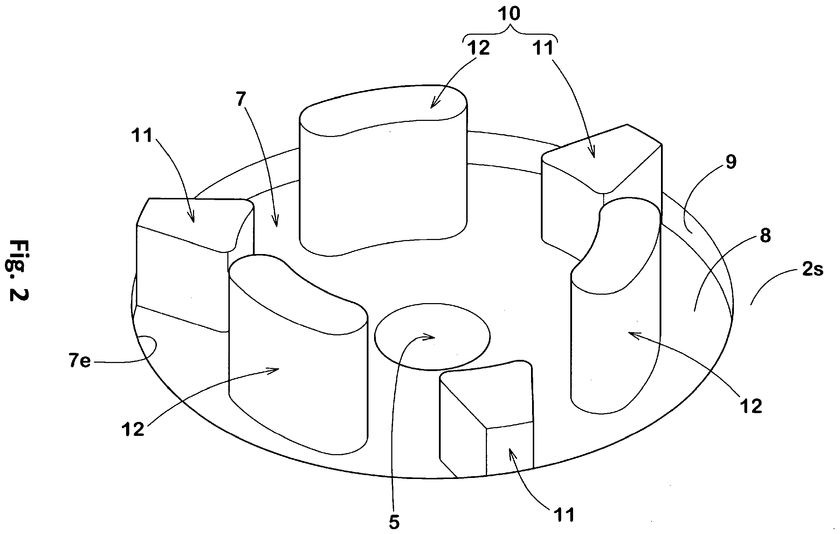

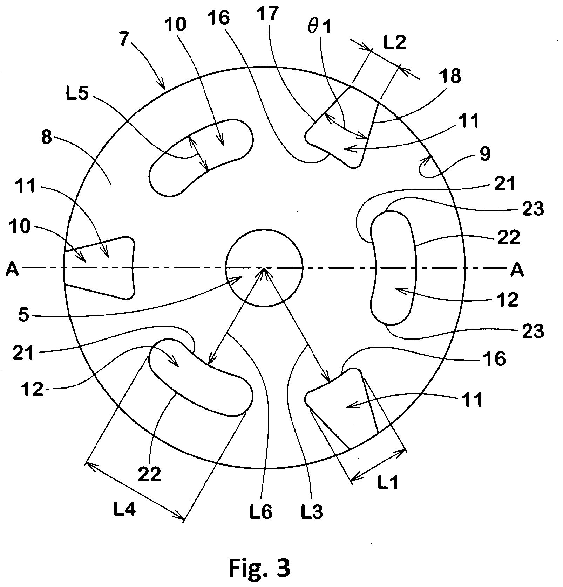

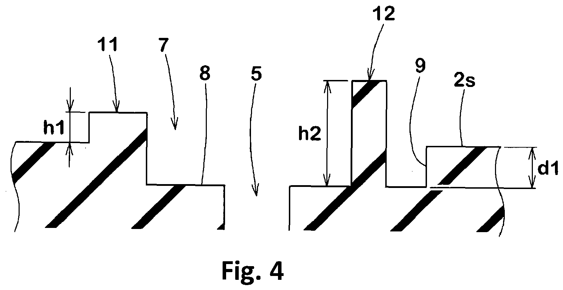

FIG. 2 shows an enlarged perspective view of the recess 7 in FIG. 1. FIG. 3 shows an enlarged plan view of the recess 7 in FIG. 1. FIG. 4 shows an end view taken along a line A-A in FIG. 3. As shown in FIGS. 2 to 4, the recess 7 includes a bottom surface 8 and an inner circumferential surface 9 connected to the bottom surface 8.

As shown in FIG. 2, in the recess 7, for example, a region surrounded by an edge 7e having a closed contour is recessed. The contour of the recess 7 can be formed in any of various shapes such as a circular shape, an elliptical shape, an oval shape, and a polygonal shape. The recess 7 of the present embodiment has, for example, a circular contour.

The width of the recess 7 (corresponding to the diameter of the recess 7 in the present embodiment) in a tread plan view is, for example, not greater than 20 mm, and preferably 14 to 18 mm. Accordingly, the ground-contact surface 2s of the tread portion 2 is ensured to have a sufficient area.

As shown in FIG. 4, the depth d1 of the recess 7 is, for example, 0.2 to 1.5 mm, and preferably 0.2 to 0.7 mm. However, the size of the recess 7 is not limited to such a size.

As shown in FIG. 2, the recess 7 is provided with a stud pin-fixing hole 5 that is open in the bottom surface 8, and a plurality of projections 10 that project from the bottom surface 8.

The stud pin-fixing hole 5 has, for example, an inner diameter smaller than the outer diameter of the stud pin. When the tire 1 is used, the stud pin is fitted into the hole 5, and a tip of the stud pin appears on the outer surface of the tread portion 2. Accordingly, great frictional force on ice is expected. The hole 5 has, for example, a circular contour in a plan view of the tread portion 2.

The projections 10 include a first projection 11 that is connected to the ground-contact surface 2s and that projects outward in the tire radial direction of the ground-contact surface 2s.

The first projection 11 prevents ice chips from entering the recess 7. Therefore, a reduction in the projecting height of the stud pin by ice chips can be inhibited. In addition, the first projection 11 is connected to the ground-contact surface 2s. Thus, the first projection 11 has excellent durability, and chipping or the like of the first projection 11 at the early stage is prevented, so that the first projection 11 improves on-ice performance over a long period of time.

As shown in FIG. 3, in a tread plan view, for example, the length, in the circumferential direction of the inner circumferential surface 9, of the first projection 11 preferably gradually increases toward the hole 5. Accordingly, in a tread plan view, the outer surface of the first projection 11 is a trapezoidal shape. Such a first projection 11 easily falls in the circumferential direction of the inner circumferential surface 9 with a portion where the first projection 11 and the inner circumferential surface 9 are connected to each other acting as a fulcrum, and thus the first projection 11 allows ice chips to be effectively discharged. The trapezoidal shape of the outer surface includes not only a complete trapezoid but also a trapezoidal shape with rounded vertices and a trapezoidal shape with slightly curved sides.

The maximum length L1, in the circumferential direction, of the first projection 11 is, for example, not greater than 5.0 mm, and preferably 1.0 to 3.0 mm. In addition, the length L1 is preferably 3% to 8% of the length, in the circumferential direction, of the inner circumferential surface 9.

The minimum length L2, in the circumferential direction, of the first projection 11 is, for example, 0.50 to 0.70 times the length L1. Such a first projection 11 can exert the above-described effects while maintaining durability.

The side surface of the first projection 11 includes, for example, a first surface 16 at the hole 5 side, and a second surface 17 and a third surface 18 between the first surface 16 and the inner circumferential surface 9.

The first surface 16 is, for example, preferably recessed outward in a radial direction from the hole 5 toward the inner circumferential surface 9 (corresponding to the radial direction of the circular contour of the recess 7 in the present embodiment). Accordingly, the first surface 16 includes a portion that extends parallel to the inner circumferential surface 9 in a tread plan view. The distance L3 in the radial direction from the center of the hole 5 to the first surface 16 is, for example, not greater than 5.0 mm, and preferably 2.5 to 4.5 mm.

The angle θ1 between the second surface 17 and the third surface 18 is, for example, preferably not greater than 90°, more preferably not greater than 45°, and 20 to 40° in the present embodiment. Such a first projection 11 easily appropriately deforms in the circumferential direction and effectively discharges ice chips within the recess 7.

As shown in FIG. 4, the height hl of the first projection 11 from the ground-contact surface 2s is, for example, preferably 0.5 to 2.0 mm. Such a first projection 11 is less likely to be damaged when coming into contact with the ground, and effectively inhibits ice chips from entering the recess 7. In addition, the first projection 11 can enhance the stiffness of the rubber around the hole 5 and also serves to enhance the ability to hold the stud pin.

As shown in FIG. 3, for example, the projections 10 of the present embodiment include a second projection 12 separated from the inner circumferential surface 9. For example, the first length L4, along the circumferential direction, of the second projection 12 is larger than the second length L5, in the radial direction, of the second projection 12. The first length L4 is, for example, not greater than 5.0 mm, and preferably 2.5 to 4.5 mm. The second length L5 is, for example, 0.8 to 1.5 mm. Accordingly, the second projection 12 is flattened in the radial direction. Such a second projection 12 can fall in the radial direction when contact pressure is applied thereto, thereby effectively discharging ice chips from the recess 7. In particular, in the present embodiment, since the first projection 11 easily falls in the circumferential direction, and the second projection 12 easily falls in the radial direction, excellent discharge effect is exerted.

The first length L4 of the second projection 12 is preferably larger than the length L1 of the first projection 11. Specifically, the first length L4 of the second projection 12 is preferably 1.5 to 2.5 times the length L1 of the first projection 11.

The second length L5 is, for example, not greater than 0.5 times the first length L4, and preferably 0.25 to 0.40 times the first length L4. Such a second projection 12 easily falls in the radial direction and has excellent durability.

The second projection 12 includes, for example, an inner surface 21 at the hole 5 side, and an outer surface 22 at the recess inner circumferential surface 9 side. Each of the inner surface 21 and the outer surface 22 extends along the inner circumferential surface 9 of the recess 7, and preferably extends parallel to the inner circumferential surface 9. In addition, two circular arc surfaces 23 are connected between the inner surface 21 and the outer surface 22. Accordingly, the second projection 12 is formed in an oval shape that is curved convexly outward in the radial direction in a tread plan view.

The minimum distance L6 in the radial direction from the center of the hole 5 to the inner surface 21 is, for example, 3.0 to 4.0 mm. For example, the inner surface 21 of the second projection 12 is preferably located inward in the radial direction of the first surface 16 of the first projection 11. In addition, the outer surface 22 of the second projection 12 is preferably located outward in the radial direction of the first surface 16 of the first projection 11. Such a second projection 12 can effectively inhibit ice chips from remaining in the recess 7.

As shown in FIG. 4, the second projection 12 preferably projects outward in the tire radial direction further than the first projection 11. The height h2 of the second projection 12 from the bottom surface 8 is, for example, preferably, 1.0 to 2.5 mm.

As shown in FIG. 3, a plurality of second projections 12 and a plurality of first projections 11 are provided around the hole 5 so as to be spaced apart from each other in the circumferential direction. Accordingly, the hole 5 is surrounded by the plurality of second projections 12 and the plurality of first projections 11. Two to four second projections 12 and two to four first projections 11 are preferably provided in the recess 7. The second projections 12 and the first projections 11 are preferably alternately provided in the circumferential direction along the inner circumferential surface 9.

The sizes of the gaps between the first projections 11 and the second projections 12 are not particularly limited. As a preferable mode, in the present embodiment, each of the lengths, in the circumferential direction, of the gaps between the first projections 11 and the second projections 12 is smaller than the length, in the circumferential direction, of each second projection 12.

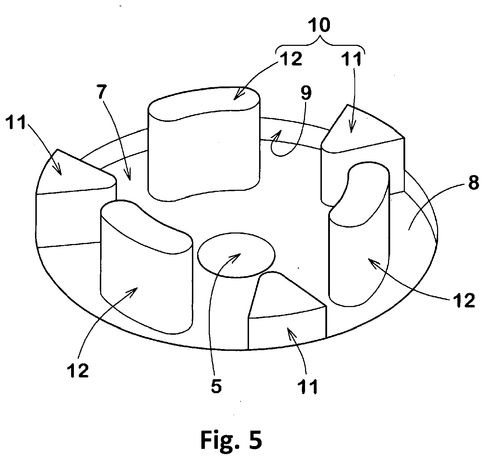

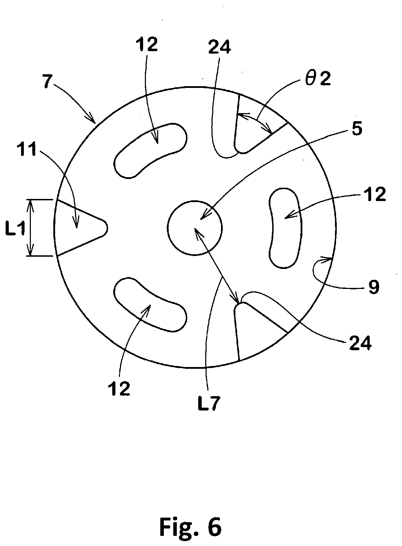

FIG. 5 shows an enlarged perspective view of a recess 7 of another embodiment of the present invention, and FIG. 6 shows an enlarged plan view of FIG. 5. In FIGS. 5 and 6, elements that are common to the above-described embodiment are designated by the same reference characters, and the description thereof is omitted here. As shown in FIGS. 5 and 6, in a tread plan view, the length, in the circumferential direction along the inner circumferential surface 9, of each first projection 11 of this embodiment gradually decreases toward the hole 5. Accordingly, the outer surface of the first projection 11 is formed in a triangular shape in a tread plan view. Such a first projection 11 serves to exert the above-described effects and also to make it easier to identify the position of the hole 5, and further can enhance workability when inserting the stud pin into the hole 5. The triangular shape of the outer surface includes not only a complete triangle but also a triangular shape with rounded vertices and a triangular shape with slightly curved sides.

As shown in FIG. 6, the maximum length L1, in the circumferential direction, of the first projection 11 is, for example, not greater than 5.0 mm, and preferably 1.0 to 3.0 mm. The distance L7 from the center of the hole 5 to a vertex 24 of the first projection 11 is, for example, not greater than 5.0 mm, and preferably 2.5 to 4.5 mm.

As shown in FIG. 6, the angle θ2 between two surfaces, of the first projection 11, connected to each other via the vertex 24 is, for example, 40 to 60°. Such a first projection 11 effectively discharges ice chips.

Although the tire according to the embodiment of the present invention has been described in detail above, the present invention is not limited to the above specific embodiment, and various modifications can be made to implement the present invention within the scope of the appended claims.

### EXAMPLES

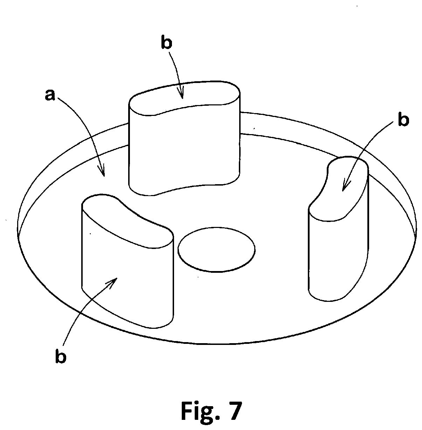

Tires with a size of 205/55R16 having the basic pattern in FIG. 1 and having the recesses shown in either FIG. 2 or FIG. 5 were produced as test tires on the basis of specifications in Table 1. As a comparative example, a tire having the basic pattern in FIG. 1 and having recesses a as shown in FIG. 7 was produced as a test tire. As shown in FIG. 7, each recess a of the tire of the comparative example is provided with only second projections b that are as described above. The tread pattern and the structures of the recesses and the second projections are common to the respective test tires. The respective test tires were tested for on-ice performance and stud pin dropping-off ratio. The common specifications and the test methods for the respective test tires are as follows.
Mount rim: 16 × 6.5
Tire internal pressure: front wheel 240 kPa, rear wheel 240 kPa
Test vehicle: a front-wheel-drive car having an engine displacement of 1400 cc
Tire mounted position: all wheels

### <On-Ice Performance>

The braking distance was measured when the test vehicle entered an icy road at 40 km/h and was suddenly braked with ABS operated. The test was conducted both on an icy road having a smooth surface on which the vehicle had not travelled (smooth icy road) and on an icy road having a surface to which ice chips and snow had adhered (rough icy road). The results of each test are indexes with the braking distance of the comparative example being regarded as 100. A lower value indicates that the braking distance is smaller and the on-ice performance is better.

### <Stud Pin Dropping-Off Ratio>

The stud pin dropping-off ratio was measured after the test vehicle travelled 30000 km in a cold city. The dropping-off ratio is the ratio of the number of stud pins dropped off by the travel to the total number of stud pins at the time of start of tire use.

The test results are shown in Table 1.

**[Table 1]**

| | Comparative example | Example 1 | Example 2 | Example 3 | Example 4 | Example 5 | Example 6 | Example 7 | Example 8 |
|---|---|---|---|---|---|---|---|---|---|
| Figure showing shapes of recess and projections | FIG. 7 | FIG. 2 | FIG. 2 | FIG. 2 | FIG. 2 | FIG. 2 | FIG. 2 | FIG. 2 | FIG. 5 |
| Distance L3 from hole to first surface of first projection (mm) | - | 3.5 | 2.5 | 4.5 | 3.5 | 3.5 | 3.5 | 3.5 | 3.5 |
| LengthLl of first projection (mm) | - | 2.5 | 2.5 | 2.5 | 1.5 | 3.5 | 2.5 | 2.5 | 2.5 |
| Height hl of first projection (mm) | - | 0.5 | 0.5 | 0.5 | 0.5 | 0.5 | 0.3 | 1.0 | 0.5 |
| On-ice performance on smooth icy road (index) | 100 | 97 | 98 | 97 | 97 | 97 | 98 | 97 | 97 |
| On-ice performance on rough icy road (index) | 100 | 95 | 96 | 95 | 96 | 96 | 96 | 95 | 95 |
| Stud pin dropping-off ratio (%) | 3.5 | 2.0 | 2.0 | 2.5 | 2.0 | 2.0 | 2.5 | 2.0 | 2.0 |

As shown in Table 1, it was confirmed that the tire of each Example exhibits excellent on-ice performance. In addition, it was also confirmed that the tire of each Example has a low stud pin dropping-off ratio.

## Claims

1. A tire (1) comprising a tread portion (2), wherein
the tread portion (2) includes a recess (7) that is recessed from a ground-contact surface (2s) thereof,
the recess (7) includes a bottom surface (8) and an inner circumferential surface (9) that is connected to the bottom surface (8) and the ground-contact surface (2s), and
the recess (7) is provided with a stud pin-fixing hole (5) that is open in the bottom surface (8), and a plurality of projections (10) that project from the bottom surface (8),
**characterized in that**
the projections (10) include a first projection (11) that is connected to the ground-contact surface (2s) and that projects outward in a tire radial direction of the ground-contact surface (2s).

2. The tire (1) according to claim 1, wherein, in a tread plan view, a length, in a circumferential direction along the inner circumferential surface (9), of the first projection (11) gradually increases toward the hole (5).

3. The tire (1) according to claim 1, wherein, in a tread plan view, a length, in a circumferential direction along the inner circumferential surface (9), of the first projection (11) gradually decreases toward the hole (5).

4. The tire (1) according to any one of claims 1 to 3, wherein the projections (10) include a second projection (12) separated from the inner circumferential surface (9).

5. The tire (1) according to claim 4, wherein the second projection (12) projects outward in the tire radial direction further than the first projection (11).

6. The tire (1) according to claim 4 or 5, wherein, in a tread plan view, a first length (L4), in a circumferential direction along the inner circumferential surface (9), of the second projection (12) is larger than a second length (L5), in a radial direction from the hole (5) toward the inner circumferential surface (9), of the second projection (12).

7. The tire (1) according to any one of claims 4 to 6, wherein the hole (5) is surrounded by a plurality of the first projections (11) and a plurality of the second projections (12).

8. The tire (1) according to claim 7, wherein the first projections (11) and the second projections (12) are alternately provided in the circumferential direction along the inner circumferential surface (9).

## Patentansprüche

1. Reifen (1), der einen Laufflächenabschnitt (2) umfasst, wobei
der Laufflächenabschnitt (2) eine Vertiefung (7) aufweist, die von einer Bodenkontaktfläche (2s) desselben vertieft ist,
die Vertiefung (7) eine Bodenfläche (8) und eine Innenumfangsfläche (9) aufweist, die mit der Bodenfläche (8) und der Bodenkontaktfläche (2s) verbunden ist, und
die Vertiefung (7) mit einem Spikestift-Befestigungsloch (5), das in der Bodenfläche (8) offen ist, und einer Vielzahl von Vorsprüngen (10), die von der Bodenfläche (8) vorstehen, versehen ist,
**dadurch gekennzeichnet, dass**
die Vorsprünge (10) einen ersten Vorsprung (11) umfassen, der mit der Bodenkontaktfläche (2s) verbunden ist und der in einer radialen Richtung des Reifens der Bodenkontaktfläche (2s) nach außen vorsteht.

2. Reifen (1) nach Anspruch 1, wobei in einer Draufsicht auf die Lauffläche eine Länge des ersten Vorsprungs (11) in einer Umfangsrichtung entlang der Innenumfangsfläche (9) allmählich in Richtung des Lochs (5) zunimmt.

3. Reifen (1) nach Anspruch 1, wobei in einer Draufsicht auf die Lauffläche eine Länge des ersten Vorsprungs (11) in einer Umfangsrichtung entlang der Innenumfangsfläche (9) allmählich in Richtung des Lochs (5) abnimmt.

4. Reifen (1) nach einem der Ansprüche 1 bis 3, wobei die Vorsprünge (10) einen zweiten Vorsprung (12) umfassen, der von der Innenumfangsfläche (9) getrennt ist.

5. Reifen (1) nach Anspruch 4, wobei der zweite Vorsprung (12) in der radialen Richtung des Reifens weiter nach außen vorsteht als der erste Vorsprung (11).

6. Reifen (1) nach Anspruch 4 oder 5, wobei in einer Draufsicht auf die Lauffläche eine erste Länge (L4) des zweiten Vorsprungs (12) in einer Umfangsrichtung entlang der Innenumfangsfläche (9) größer ist als eine zweite Länge (L5) des zweiten Vorsprungs (12) in einer radialen Richtung von dem Loch (5) zu der Innenumfangsfläche (9).

7. Reifen (1) nach einem der Ansprüche 4 bis 6, wobei das Loch (5) von einer Vielzahl der ersten Vorsprünge (11) und einer Vielzahl der zweiten Vorsprünge (12) umgeben ist.

8. Reifen (1) nach Anspruch 7, wobei die ersten Vorsprünge (11) und die zweiten Vorsprünge (12) abwechselnd in der Umfangsrichtung entlang der Innenumfangsfläche (9) vorgesehen sind.

## Revendications

1. Pneumatique (1) comprenant une portion formant bande de roulement (2), dans lequel
la portion formant bande de roulement (2) inclut un évidement (7) qui est en retrait par rapport à une surface de contact au sol (2s) de celui-ci,
l'évidement (7) inclut une surface de fond (8) et une surface circonférentielle intérieure (9) qui est connectée à la surface de fond (8) et à la surface de contact au sol (2s), et
l'évidement (7) est doté d'un trou de fixation de broche de clou (5) qui est ouvert dans la surface de fond (8), et d'une pluralité de projections (10) qui se projettent depuis la surface de fond (8),
**caractérisé en ce que**
les projections (10) incluent une première projection (11) qui est connectée à la surface de contact au sol (2s) et qui se projette vers l'extérieur dans une direction radiale du pneumatique de la surface de contact au sol (2s).

2. Pneumatique (1) selon la revendication 1, dans lequel, dans une vue en plan de la bande de roulement, une longueur, dans une direction circonférentielle le long de la surface circonférentielle intérieure (9), de la première projection (11) augmente graduellement vers le trou (5).

3. Pneumatique (1) selon la revendication 1, dans lequel, dans une vue en plan de la bande de roulement, une longueur, dans une direction circonférentielle le long de la surface circonférentielle intérieure (9), de la première projection (11) diminue graduellement vers le trou (5).

4. Pneumatique (1) selon l'une quelconque des revendications 1 à 3, dans lequel les projections (10) incluent une seconde projection (12) séparée de la surface circonférentielle intérieure (9).

5. Pneumatique (1) selon la revendication 4, dans lequel la seconde projection (12) se projette vers l'extérieur dans la direction radiale du pneumatique plus loin que la première projection (11).

6. Pneumatique (1) selon la revendication 4 ou 5, dans lequel, dans une vue en plan de la bande de roulement, une première longueur (L4), dans une direction circonférentielle le long de la surface circonférentielle intérieure (9), de la seconde projection (12) est plus grande qu'une seconde longueur (L5), dans une direction radiale depuis le trou (5) vers la surface circonférentielle intérieure (9), de la seconde projection (12).

7. Pneumatique (1) selon l'une quelconque des revendications 4 à 6, dans lequel le trou (5) est entouré par une pluralité de premières projections (11) et une pluralité de secondes projections (12).

8. Pneumatique (1) selon la revendication 7, dans lequel les premières projections (11) et les secondes projections (12) sont prévues en alternance dans la direction circonférentielle le long de la surface circonférentielle intérieure (9).
